# EUROPEAN PATENT SPECIFICATION

(11) **EP 1 131 996 B1**
(45) Date of publication and mention of the grant of the patent: **08.03.2006**
(21) Application number: 01202453.5
(22) Date of filing: 03.04.1995
(51) Int. Cl.: A01J 7/00, A01J 5/017, A01J 5/013

(54) **A method of automatically milking animals and an implement for applying same**
Verfahren und Vorrichtung zum automatischen Melken von Tieren
Méthode et procédé de traite automatique d'animaux

(30) Priority: 14.04.1994 NL 9400589; 27.10.1994 NL 9401785; 24.02.1995 NL 9500362
(43) Date of publication of application: 12.09.2001
(62) Divisional of application: 95200841.5
(73) Proprietor: MAASLAND N.V., 3147 PA Maassluis (NL)
(72) Inventor: van den Berg, Karel, 2971 BR Bleskensgraaf (NL)
(74) Representative: Corten, Maurice Jean F.M.

(56) References cited:
- EP-A- 0 137 367
- EP-A- 0 534 565
- EP-A- 0 551 956
- EP-A- 0 638 231
- DATABASE WPI Section PQ, Week 198821 Derwent Publications Ltd., London, GB; Class P13, AN 1988-145460 XP002190238 & NL 8 602 505 A (VAN DER LELY NV C), 2 May 1988 (1988-05-02)

## Description

The present invention relates to a method of automatically milking animals, such as cows, according to the preamble of claim 1.

Such methods are known. They might have the disadvantage that they not always prevent illnesses such as mastitis satisfactorily.

It is the object of the present invention to prevent illnesses as much as possible.

Therefore the invention relates to a method of automatically milking animals in a milking box, including a computer and a cow recognition system, by means of which the animals can be identified and a data file in the computer is accessible, in which file are stored the data relevant to automatically milking the animal, characterized in that in the computer there is recorded an average value of the time differences between the moment at which an animal reports at or in the milking box and the moment of the previous milking turn, while on the basis of this average value an alarm or attention signal is delivered when an animal has not yet reported for a next milking turn and since the last milking turn of the animal there has elapsed a period of time which corresponds to the said average time difference, possibly increased by an additional time value depending on the spreading in the said average time difference.

For a better understanding of the invention and to show how the same may be carried into effect, reference will now be made, by way of example, to the accompanying drawings, in which:
Figure 1 illustrates a shed organization with an implement for automatically milking animals;
Figure 2 illustrates schematically a portion of the implement for automatically milking animals, and
Figures 3A to 3E illustrate schematically the position of the various doors to and from the milking area and the isolation area.

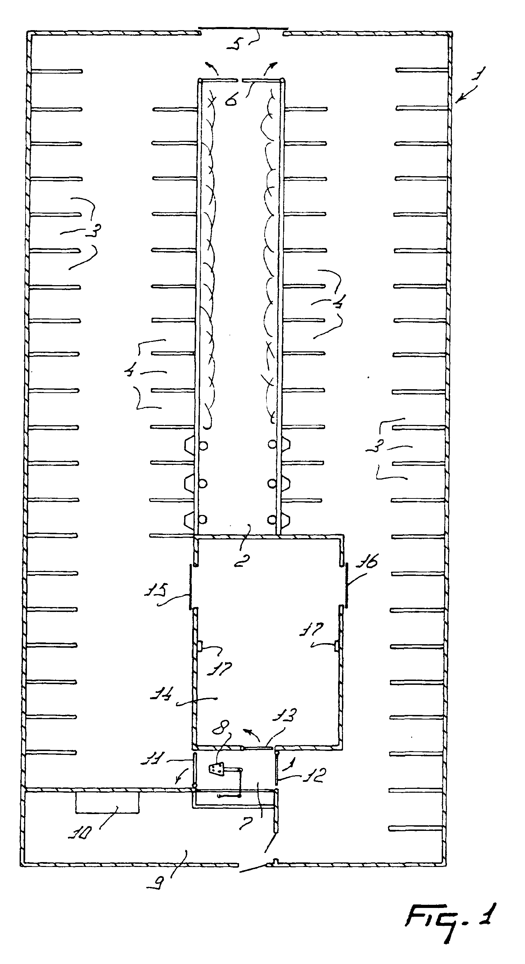

Figure 1 shows a loose housing 1, in which a feeding area 2 is present in the longitudinal direction thereof. At both sides of the feeding area 2, cubicles 3 are located along substantially the overall length of the loose housing 1 along the sides of the outer wall and, at that side where the feeding area 2 is located there are feeding stations 4. Via doors 5 and 6 in the shed 1, fodder in the form of hay can be transferred by means of a tractor driving in the feeding passage 2 to feed channels and/or concentrate to feeding troughs on the feeding stations 4. The cubicles 3 and the feeding stations 4 are arranged such that there is left sufficient room for the animals to walk between the cubicles and the feeding stations, so that they can move to a sufficient extent and basically can walk around the shed. Near the short side of the shed there is an area 7, in which a machine for automatically milking animals is positioned, which milking machine includes a milking robot 6 for automatically connecting the teat cups to the teats of an animal to be milked and disconnecting same therefrom. Between the milking area 7 and the short side of the shed 1 there is a computer area 9, in which a computer 10 is located together with all the equipment that is part of the milking machine but is not disposed in the milking area 7 proper. The milking box 7 has an entrance door 11 and two exit doors 12 and 13. The animals can enter the milking area from the exercise area via the door 11, whilst the animals can enter the exercise area again from the milking area via the door 12. As soon as an animal has entered the milking area from the exercise area or, via the exercise area, from the pasture, the animal's identity will be established in the customary manner. By means of the cow recognition system used therefor, access is obtained to a data file present in the computer of the system for this animal. In this file has been recorded inter alia how much time has elapsed since her previous milking turn. From the subsequently established time differences between the moment when an animal enters the milking box, or at least reports at the milking box (in case the animal is identified prior to entering same), and the previous milking turn, there can be determined an average value of these time differences. Preferably, this is done on the basis of a progressive average, e.g. each time over the last seven days. Furthermore the spreading in this average is determined. The said average value and the spreading therein are recorded in the memory file for the relevant animal and serve as a basis for a possible warning or placing on an attention list, when an animal does not report in time at the milking box. When since the previous milking turn there has elapsed a period of time corresponding to the said average value plus a certain additional time determined by the said spreading without the animal having reported, then the animal must be collected in order to be milked.

Next to the milking area 7 there is an isolation area 14, which can be reached from the milking area via the door 13. In addition, the isolation area 14 is accessible via doors 15 and 16. In the area 14, animals can be separated from the animals present in the exercise area of the shed 1. This may be necessary because the animals have such an udder shape that the teat cups cannot be connected automatically, because they are to be inseminated or because their hoofs are to be clipped, in which event the farmer can lead the animals e.g. via the door 15 into the isolation area 14, but also because mastitis has been detected in the animals present in the milking area 7, which animals are then led from there via the door 13 into the isolation area 14 instead of into the exercise area of the shed 1. The farmer can fetch animals from the isolation area 14 via the door 16. Using the computer 10, which is further used for controlling the automatic milking procedure and the automatic connecting of the teat cups to the teats and disconnecting same therefrom, and also for performing all possible actions that are also of importance to the milking operation, the number of animals which are led from the milking area 7 to the isolation area 14 can be updated. When, however, the farmer himself leads animals into the isolation area via the door 15, or removes animals therefrom e.g. via the door 16, then the number of animals in the isolation area, as recorded in the computer 10, will not correspond to the actual number. To prevent this error, there are present counting means 17 which are connected to the computer 10. These counting means are preferably disposed near the doors 15 and 16 and can be operated manually by the farmer. When the farmer leads an animal via one of the doors 15, 16 into the isolation area, then, by operating the counting means 17, he can bring the number of animals indicated thereby in correspondence with the actual number. Likewise, when he fetches an animal from the isolation area 14 via one of the doors 15, 16, the farmer can adjust, by operating the counting means, the number of animals present in the isolation area, so that, since the counting means 17 are connected to the computer 10, the correct number of animals present in the isolation area is updated at all times in the computer 10 and, if so desired, can be displayed on a display screen provided on the counting means. When in the absence of the farmer too many animals are passed from the milking area 7 to the isolation area 14, an alarm can be triggered to warn the farmer that the number of animals in the isolation area is too high.

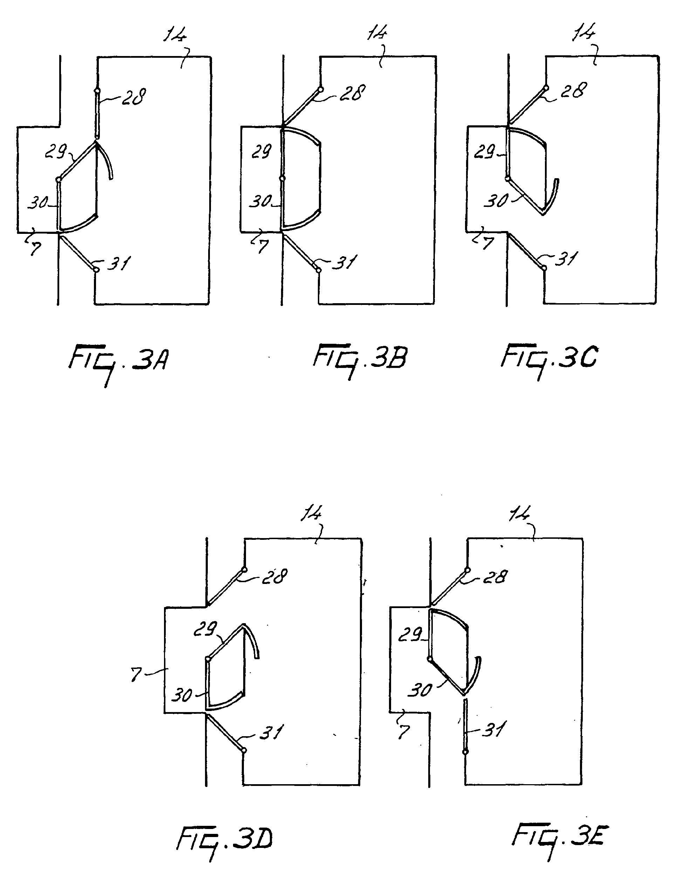

As has already been stated before, there may be present an isolation area for animals which have such an udder shape that the teat cups cannot be connected automatically. After these animals have been identified, they can be passed on to the isolation area, without the milking robot trying to connect the teat cups. Also animals, whose connection of the teat cups has failed even after repeated efforts, can be guided via the milking box to the isolation area, certainly during the so-called curfew times, e.g. during the night. The animals guided to the isolation area for the above reasons should be milked yet at a later instant. Then they are guided from the isolation area to the milking box again, where the teat cups usually will have to be connected manually. This manner of acting is represented in Figures 3A to 3E. In these drawings, the milking area is indicated again by reference numeral 7 and the isolation area by reference numeral 14. The entering and leaving of these areas is effected by means of, preferably computer-controlled, doors 28, 29, 30 and 31. In the position of the doors as shown in Figure 3A, an animal can enter the milking box 7 from the exercise area in the shed; the doors 28 and 29 are subsequently closed (see Figure 3B). When thereafter the connection of the teat cups fails or this is not even tried due to the deviating udder shape, then the door 30 is opened and the animal is guided to the isolation area 14 (see Figure 3C). Then the door 30 is closed. When in this manner a certain number of non-automatically to be milked animals have been collected in the isolation area, then these will be admitted from the isolation area 14 to the milking box in the presence of the farmer and at a moment to be decided by him. After the door 30 has opened (see Figure 3D), an animal can enter the milking box from the isolation area, after which the door 30 is closed again, the animal is subsequently milked and dismissed from the milking box by opening of the doors 30 and 31 (see Figure 3E) and guided to the exercise area of the shed. Then the doors 30 and 31 close, while the door 29 is opened again in order to admit the next animal from the isolation area to the milking box.

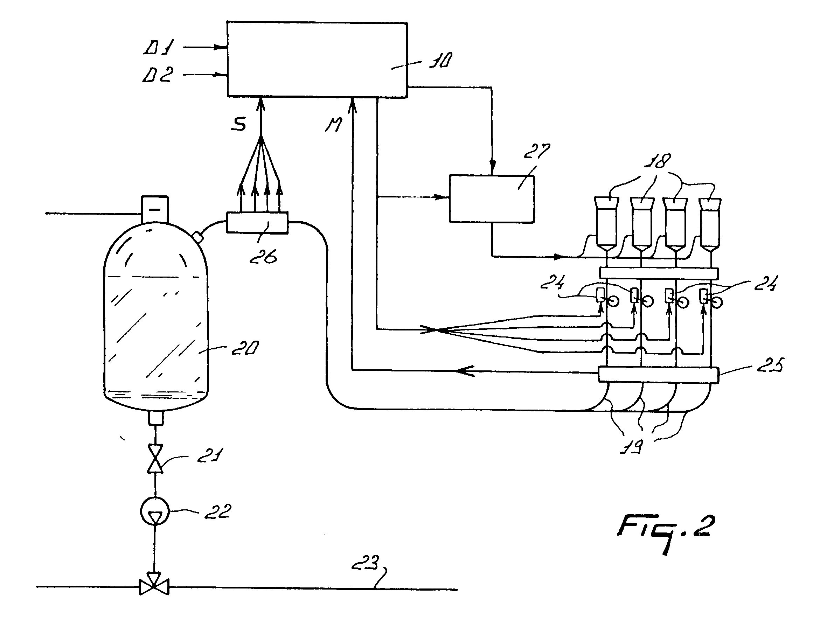

The implement for automatically milking animals, such as it is partially and schematically shown in Figure 2, includes teat cups 18 which are automatically connected to the teats of an animal to be milked with the aid of the milking robot 8. Each of the milk lines 19 connected to the teat cups 18 ends individually into a milk jar 20, from which, each time when a predetermined quantity of milk is contained therein, this milk is pumped by means of a pump 22 via a shut-off device 21 into a line 23 leading to a (non-shown) milk tank. Under the teat cups 18, each of the milk lines 19 includes a shut-off device 24, while furthermore a mastitis sensor 25 and a milk flow sensor 26 are incorporated in each of the milk lines 19. The milk flow sensors 26 are accommodated in the milk lines 19 near the region where these milk lines end in the milk jar 20. Figure 2 once again shows the computer 10. Signals S from the individual milk flow sensors 25 are applied to this computer 10, each of these signals S being indicative of the milk flow in a relevant milk line 19. In addition, signals M supplied by each of the mastitis sensors are applied to the computer 10. In the present embodiment, the mastitis sensors are constituted by milk conductivity sensors. The signals supplied by these sensors, which signals are a measure of the conductivity of the milk, are compared in the computer 10 to the progressive, weighted or non-weighted average of the milk conductivity recorded during previous milking turns, whereafter, when the last-measured milk conductivity exceeds the progressive, weighted or non-weighted average to an excessive extent, an attention signal is displayed on the display screen of the computer 10, on the basis of which signal the farmer can decide whether it is a matter of mastitis and whether measures to counteract it must be taken or not. These data, and also possibly other data relevant to the milking of the animal or to her health, can not only be displayed on the display screen of the computer, but also be shown on attention lists to be printed out or even on a display screen to be arranged e.g. in the shed or elsewhere in the farm, so that the farmer can see the relevant data from a distance and at a single glance, without him having to strain his eyes on a computer display screen. By keying-in an affirmation in the computer 10 there is produced a signal M, which indicates that it is indeed a matter of mastitis. This signal can, of course, also be produced automatically when the last-measured milk conductivity has exceeded the progressive, weighted or non-weighted average recorded in the computer to a given extent. In the computer 10, threshold values D1 and D2 may have been recorded in a programme for the milk flow in the lines 19, or these threshold values may be entered via a keyboard. In the computer 10, a threshold value D is derived from the signal M and the threshold values D1 and D2, for which it holds that, as soon as the signal S from a milk flow sensor 26 has fallen to below the threshold value D, the computer 10 produces a control signal. This control signal can be applied to a shut-off device 24 for closing the relevant milk line and for thereafter neutralizing the underpressure in the relevant teat cup and for optionally disconnecting the teat cup immediately thereafter. For the benefit of the milking operation there is present a pulsator 27, which is controlled by the computer 10 and which produces a pulsating underpressure in each of the teat cups. After the said control signal has been applied, the pulsating pressure in the relevant teat cup is to be neutralized, which is effected by admitting ambient pressure thereinto. The threshold value D, such as it is established in the computer 10, satisfies the Boolean expression $D = D 1. \overline{M} + D 2. M .$ In other words, in the computer 10 there is determined a mastitis-dependent threshold value for the milk flow in a milk line 19, whilst, as soon as the milk flow has fallen to such a level that it has arrived below the predetermined threshold value D, milking of the relevant udder quarter is to be stopped. Since the second threshold value, i.e. the threshold value which holds for the case when mastitis has been found in an udder quarter, is lower than the first threshold value, a relevant udder quarter is milked for a longer period of time than would be the case when no mastitis was detected in an udder quarter.

Instead of the second threshold value D2 it is also possible to utilize a predetermined time interval, which starts after the milk flow in the relevant line has fallen to below the threshold value D1, for stripping the udder quarter.

The invention is not limited to the embodiment described in the foregoing, but includes all kinds of modifications, of course, as far as they are within the protective scope of the accompanying claims.

## Claims

1. A method of automatically milking animals in a milking box, including a computer and a cow recognition system, by means of which the animals can be identified and a data file in the computer is accessible, in which file are stored the data relevant to automatically milking the animal, **characterized in that** in the computer there is recorded an average value of the time differences between the moment at which an animal reports at or in the milking box and the moment of the previous milking turn, while on the basis of this average value an alarm or attention signal is delivered when an animal has not yet reported for a next milking turn and since the last milking turn of the animal there has elapsed a period of time which corresponds to the said average time difference, possibly increased by an additional time value depending on the spreading in the said average time difference.

## Patentansprüche

1. Verfahren zum automatischen Melken von Tieren in einer Melkbox, die einen Computer und ein Kuherkennungssystem umfaßt, mittels derer die Tiere identifiziert werden können und in dem Computer eine Datei aufgerufen werden kann, in der die Daten bezüglich des automatischen Melkens des Tieres gespeichert sind,
**dadurch gekennzeichnet, daß** in dem Computer ein Mittelwert der Zeitunterschiede zwischen dem Zeitpunkt, zu dem sich ein Tier bei oder in der Melkbox einfindet, und dem Zeitpunkt des vorherigen Melkvorganges aufgezeichnet wird, wobei auf der Basis dieses Mittelwertes ein Alarm- oder Warnsignal gegeben wird, wenn sich ein Tier noch nicht zu einem weiteren Melkvorgang eingefunden hat und seit dem letzten Melkvorgang des Tieres ein Zeitraum vergangen ist, der der durchschnittlichen Zeitdifferenz entspricht, eventuell verlängert um einen zusätzlichen Zeitwert, der von der Streuung in der durchschnittlichen Zeitdifferenz abhängt.

## Revendications

1. Procédé de traite automatique d'animaux dans un box de traite, comportant un ordinateur et un système de reconnaissance de vache, au moyen desquels les animaux peuvent être identifiés et un fichier de données dans l'ordinateur est accessible, fichier dans lequel sont stockées les données concernant la traite automatique de l'animal, **caractérisé en ce qu'**il est enregistré dans l'ordinateur une valeur moyenne des différences de temps entre le moment auquel un animal se présente au box de traite ou dans celui-ci et le moment du passage de traite précédent, tandis que, sur la base de cette valeur moyenne, un signal d'alarme ou d'attention est délivré lorsqu'un animal ne s'est pas encore présenté au passage de traite suivant et depuis le dernier passage de traite de l'animal, et qu'il s'est écoulé une période de temps qui correspond à ladite différence de temps moyenne, éventuellement augmentée d'une valeur de temps additionnelle dépendant de l'élargissement de ladite différence de temps moyenne.
